# EUROPEAN PATENT APPLICATION

(11) **EP 0 560 547 A1**
(43) Date of publication of application: **15.09.1993**
(21) Application number: 93301718.8
(22) Date of filing: 08.03.1993
(51) Int. Cl.: H04N 1/40

(54) **Improvements relating to screened images**

(30) Priority: 13.03.1992 GB 9205477
(71) Applicant: CROSFIELD ELECTRONICS LIMITED, Hemel Hempstead Hertfordshire HP2 7RH (GB)
(72) Inventor: Webb, Graham, New Barnet, Herts, EN5 5NR (GB); Roe, Malcolm David McKinnon, Dagnall, Berkhamstead, Herts. (GB)
(74) Representative: Skone James, Robert Edmund

(57) **Abstract**

A method and apparatus for generating a digital half-tone dot representation of an image in which the pixels of the image are represented by digitally defined soft dots from an initial digital half-tone dot representation of the image in which the pixels of the image are represented by a number of digitally defined hard dot values. The method comprising interpolating the digitally defined soft dot values from the digitally defined hard dot values.

In addition an apparatus for transforming a first hard or soft half-tone dot representation of an image to a second hard or soft half-tone dot representation of the image, the apparatus comprising
a) a first transform means (4) for converting a first hard half-tone dot representation of an image to a second soft half-tone dot representation of the image ;
b) a second transform means (5) for transforming a first soft half-tone dot representation of an image to a second soft half-tone dot representation of the image ; and,
C) a third transform means (6) for converting a second soft half-tone dot version of an image generated by the first or second transform means to a second hard half-tone dot version of the image.

## Description

The method relates to methods and apparatus for generating a digital half-tone dot representation of an image.

In the digital production of colour separations, a coloured original is typically scanned by traversing an opto-electronic scanner across the original to obtain colour separation signals representing intensities of, for example, yellow, magenta and cyan. The intensities are then corrected in a colour computer to derive picture signals for each colour and add a black channel, these signals being used to determine the size of the half-tone dots necessary to create the half-tone representation of the image which is to be produced on the output surface. One common process for generating half-tone outputs comprises the generation of "hard" dots which are created by exposing an output surface to parallel beams which are either on or off. During the scanning process, the current pixel value is compared with a half-tone dot map value to generate a binary control signal which is used to control the output beam. In order to obtain satisfactory output, systems which make use of hard dots have to operate at high resolution, often around 144 lines/mm.

An alternative approach is to achieve the effect of a higher resolution than would otherwise be allowed by the raster by using "soft" dots in which the difference between the current pixel value and corresponding map value is determined and this is applied to a suitable function which causes the output beam to take up intermediate values when the edge of a dot is being exposed. This technique is described in much more detail in EP-B-0047145. For a given resolution, soft dots show a much better dot shape. However, the greater softness is sometimes considered a disadvantage.

A further soft dot technique is described by US-A-4543613. In this patent, the distribution of the quantity of light beams for exposing a lattice of minute dots in a half-tone dot area is gradually reduced from the centre to the periphery thereof. This increases the degree of conformity of the exposed minute dots to the half-tone dot area.

One difference between these systems is that hard dots require one bit per element at a high resolution whereas soft dots require several bits (often a byte) at a relatively low resolution. This makes it difficult and generally impossible to link soft dot systems with other output or marking engines.

Image processing systems exist which are either hard dot or soft dot based. Each system has its own advantages but there is a need to be able to interconnect previously incompatible systems so that image data obtained on one system can be output on another working on a different basis.

In accordance with one aspect of the present invention, a method of generating a digital half-tone dot representation of an image in which the pixels of the image are represented by digitally defined soft dots from an initial digital half-tone dot representation of the image in which the pixels of the image are represented by a number of digitally defined hard dot values comprises interpolating the digitally defined soft dot values from the digitally defined hard dot values.

In accordance with a second aspect of the present invention, apparatus for generating a digital half-tone dot representation of an image in which the pixels of the image are represented by digitally defined soft dots from an initial digital half-tone dot representation of the image in which the pixels of the image are represented by a number of digitally defined hard dot values comprises means for interpolating the digitally defined soft dot values from the digitally defined hard dot values.

We have realised that it is possible to arrive at a soft dot representation of an image by starting from a hard dot version, often at a higher resolution which may or may not be physically realisable, and then interpolating this, by conventional techniques, to the soft dot representation. This then enables a hard dot based system to be connected simply to a soft dot based system.

The invention has a further advantage since when combined with other known techniques it enables a very flexible piece of apparatus to be devised which can convert between hard and soft dot representations of an image. Thus we provide in accordance with a third aspect of the present invention, apparatus for transforming a first hard or soft half-tone dot representation of an image to a second hard or soft half-tone dot representation of the image, the apparatus comprising
a) a first transform means comprising apparatus according to the second aspect of the invention for converting a first hard half-tone dot representation of an image to a second soft half-tone dot representation of the image;
b) a second transform means for transforming a first soft half-tone dot representation of an image to a second soft half-tone dot representation of the image; and,
c) a third transform means for converting a soft half-tone dot version of an image generated by the first or second transform means to a hard half-tone dot version of the image.

This apparatus thus provides the ability to start with either hard or soft dot representations of an image at one resolution and finish with a choice of either a hard or soft dot representation of the image at another resolution.

Typically, the third transform means will be constructed in accordance with the invention described in EP-A-0403226.

The invention is applicable to the processing of both monochrome and coloured images and in the latter case the methods would be applied to each colour separation separately.

The processing means would typically be defined by hardware components although a suitably programmed computer could be used instead or as well.

Some examples of methods and apparatus according to the present invention will now be described with reference to the accompanying drawings, in which:-
Figure 1 is a block diagram of apparatus for generating hard and soft dot versions of an image linked together by an interpolator;
Figure 2 illustrates at a very enlarged and coarse scale a small portion of a hard dot representation of a colour separation;
Figure 3 illustrates the same portion as Figure 2 but after interpolation to a soft dot version and again at an enlarged and coarse scale; and,
Figure 4 is a block diagram of apparatus for providing conversion between hard and soft dot inputs to hard and soft dot outputs.

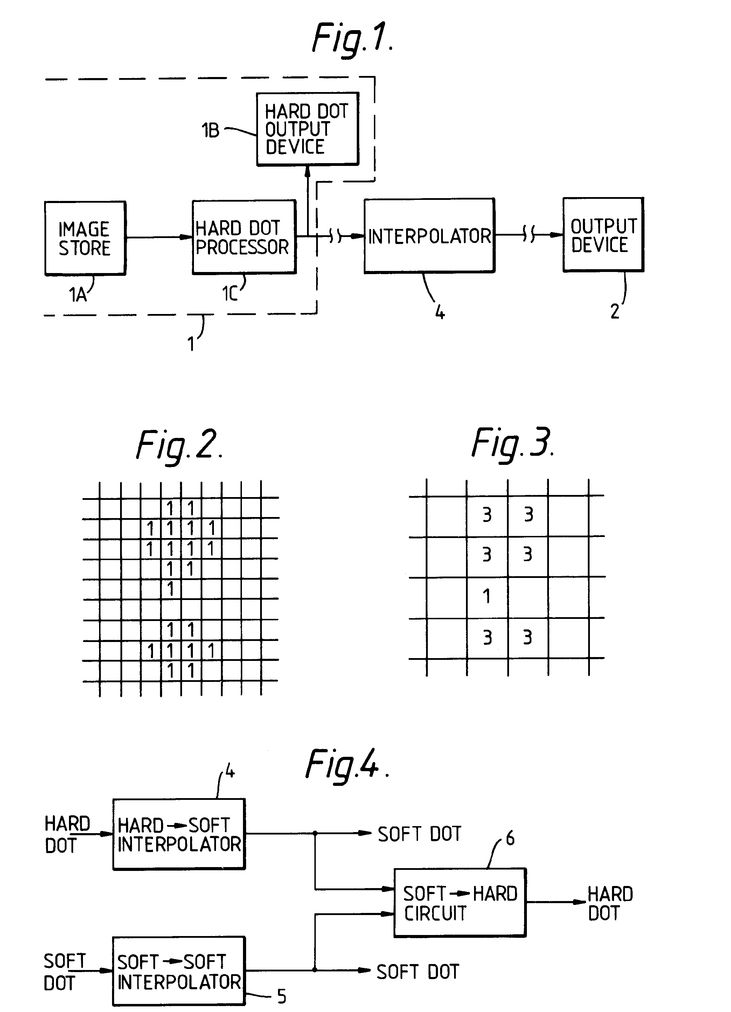

The apparatus shown in Figure 1 comprises a hard dot image processing device 1 which includes an image store 1Awhich stores for each pixel of an image a value, typically 8 bits, for each colour component of the image representing the intensity of that colour component corresponding to that pixel. The device also includes a hard dot output device 1B such as a flat bed scanner to which the pixel data from the store 1 is fed via a hard dot processor 1C which generates in a conventional manner a digital, half-tone dot representation of the image in which each element of the dot is defined by a binary value. Typically, each image pixel could define 12x 12 cells making up a proportion of a half-tone dot dependant on the screen ruling. The device 1 is to be linked to a soft dot output device 2 which may include, for example, a cylinder on which a record medium is mounted and an expose head containing one or more laser beams which are controlled to selectively expose the film in a half-tone dot pattern so as to reproduce the image in the store 1A in half-tone dot form. An example of a suitable output device 2 is the Crosfield Magnascan 6x6 series. The output device 2 is separate from the device 1 and may form part of a separate image processing device (not shown) which generates soft dot output. This device will be separate from the device 1 and could be positioned remote from the device 1, for example many miles away and be linked with the device 1 via a communication link such as a public switched telephone link. Alternatively, the components shown in Figure 1 could all be permanently connected together at a local site.

The device 1 is linked to the output device 2 via an interpolator 4 to be described below. The interpolator 4 could be incorporated with the device 1, with the device 2, or sited between the two devices as shown in Figure 1.

In some cases an image store could be provided between the interpolator and one or both of the devices 1, 2. However, the conversion can be carried out without an image store on the fly, although a one or two line store would be required in the interpolator 4.

Figure 2 illustrates a small portion of the image as represented by hard dots output from the processor 1 C where individual dot cells are illustrated, some of the cells including a value "1" indicating that the corresponding laser beam should be turned "on" when that dot cell is scanned, the remaining dot cells being coded "o" or "off'.

The hard dot values are fed from the processor 1C to an interpolator 4 of conventional form which interpolates the incoming values to lower resolution, multi-bit values as shown in Figure 3. ln this particular example, a very simple interpolation is shown in which the binary values in the dot cells of Figure 2 corresponding to a cell of Figure 3 are simply added up. These new values are then used as analogue control values for the laser beams in a manner similar to that described with reference to Figures 12-17 of EP-B-0047145.

More complex interpolations could be used, for example various forms of weighted sum and other conventional interpolation methods. It would be possible, for example, to use a non-linear function of the sum. It must be appreciated that the example shown in Figures 2 and 3 is unrealistically coarse but is intended to explain the principles. Further, in general, the results of this method are likely to require renor- malisation.

A preferred process, which avoids the need to re- normalise the data after interpolation will be described. Soft dot data are naturally present in grey-level form. For example, 0 may represent off, 255 fully on, and 1 to 254 intermediate levels. To interpolate this data we just apply any standard method for 2-D graphics. The result is also grey-level data and, hence, equally suitable for soft dot output. Hard dot data are binary. For present purposes we need to make them look like the same sort of grey-level data as soft dots. The easiest way is to start by representing the data with (using the same example as above) 0 and 255 rather than the more usual 0 and 1. It is then possible to apply the same interpolation methods as used for soft dot data. After interpolation, grey levels between 0 and 255 will have been created on the edges of dots. This is just what we need for soft dot output. Thus, soft dot to soft dot and hard dot to soft dot methods of interpolation are almost identical. This is important also when considering the interpolator 5 described below. An example of conventional methods of interpolation is described in "Multirate Digital Signal Processing" by Ronald E.Crochiere and Lawrence R. Rabiner, published by Prentice-Hall (1983). Note that in this book the term interpolation is restricted to the process of increasing resolution. Decreasing resolution is termed decimation. Although it applies mainly to 1-D data, it is easy to decompose the 2-D problem into two 1-D problems. If we wish to convert a resolution of R x R to S x S we may go via a temporary resolution of R X S.

The interpolator 4 of Figure 1 can be used as part of a multi-purpose unit as shown in Figure 4. Thus, Figure 4 not only includes the interpolator 4 but also an interpolator 5 for interpolating a soft dot version of an image to another soft dot version at a different resolution, and an adaptive thresholding circuit 6 for Interpolating a soft dot version of an image to a hard dot version. The circuit 6 may be of the form described in more detail in EP-A-0403226 incorporated herein by reference. The apparatus for Figure 4 has two input ports for hard and soft dot versions of an image respectively and two or three output ports for soft and hard dot representations of the image respectively. This unit then allows a wide variety of input and output devices to be connected together which would otherwise be incompatible because of their limitation to either hard or soft representations of images.

As can be seen in Figure 4, to convert a soft dot version of an image to hard dot version, the process initially produces an interpolated soft dot version, following which the interpolated version is converted to a hard dot version. The soft dot to soft dot interpolation is generally important so as to achieve a change in resolution. However, if the requirement is simply to convert from soft dots to hard dots without performing a change of resolution,the interpolator 5 could be bypassed.

## Claims

1. Amethod of generating a digital half-tone dot representation of an image in which the pixels of the image are represented by digitally defined soft dots from an initial digital half-tone dot representation of the image in which the pixels of the image are represented by a number of digitally defined hard dot values, the method comprising interpolating the digitally defined soft dot values from the digitally defined hard dot values.

2. Apparatus for generating a digital half-tone dot representation of an image in which the pixels of the image are represented by digitally defined soft dots from an initial digital half-tone dot representation of the image in which the pixels of the image are represented by a number of digitally defined hard dot values, the apparatus comprising means (4) for interpolating the digitally defined soft dot values from the digitally defined hard dot values.

3. Apparatus for transforming a first hard or soft half-tone dot representation of an image to a second hard or soft half-tone dot representation of the image, the apparatus comprising
a) a first transform means (4) comprising apparatus according to claim 2 for converting a first hard half-tone dot representation of an image to a second soft half-tone dot representation of the image;
b) a second transform means (5) for transforming a first soft half-tone dot representation of an image to a second soft half-tone dot representation of the image; and,
c) a third transform means (6) for converting a second soft half-tone dot version of an image generated by the first or second transform means to a second hard half-tone dot version of the image.
